(19) Europäisches Patentamt
European Patent Office
Office européen des brevets

(11) EP 2 484 736 A1

(12) **EUROPEAN PATENT APPLICATION**

(43) Date of publication:
08.08.2012 Bulletin 2012/32

(51) Int Cl.:
*C09J 123/14* (2006.01)  *C09J 123/22* (2006.01)
*C09J 7/02* (2006.01)

(21) Application number: 12153742.7

(22) Date of filing: 03.02.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 04.02.2011 JP 2011023225
13.12.2011 JP 2011272118

(71) Applicant: Nitto Denko Corporation
Osaka 567-8680 (JP)

(72) Inventors:
• Iseki, Toru
Ibaraki-shi, Osaka 567-8680 (JP)
• Hiramatsu, Tsuyoshi
Ibaraki-shi, Osaka 567-8680 (JP)
• Ando, Masahiko
Ibaraki-shi, Osaka 567-8680 (JP)

(74) Representative: Grünecker, Kinkeldey,
Stockmair & Schwanhäusser
Leopoldstrasse 4
80802 München (DE)

(54) **Adhesive and adhesive tape**

(57)     The present invention provides an adhesive comprising a polyolefin (a), a hydroxyl group-containing polyolefin (b) and a crosslinking agent (c) having a functional group capable of reacting with the hydroxyl group.

FIG. 1

**Description**

Technical Field

The present invention relates to a polyolefin-based adhesive containing polyolefin, and an adhesive tape having an adhesive layer made of this adhesive.

Background Art

Polyolefin-based adhesives (particularly rubber-based adhesives containing a rubber such as polyisobutylene) are used for a wide variety of applications. However, polyolefin-based adhesives and rubber-based adhesives are known to have poor adhesiveness to ordinary substrates (e.g., polyester substrates, polyolefin substrates) ("adhesiveness to substrates" is hereinafter sometimes abbreviated as "an anchor property"). Therefore, various techniques to improve anchor property of an adhesive layer made of a polyolefin-based adhesive have been proposed heretofore.

For example, patent document 1 discloses a technique for improving the anchor property by interlaying an undercoat layer between a rubber-based adhesive layer and a substrate (support). However, addition of an undercoat layer is undesirable since a step and equipment therefor are necessary.

[Document List]

[patent document]

patent document 1: JP-A-4-370179

[SUMMARY OF THE INVENTION]

Problems to be Solved by the Invention

Developed with a focus on the above-described circumstances, the present invention is intended to provide an adhesive capable of forming an adhesive layer superior in the anchor property to an adhesive substrate.

Means of Solving the Problems

The present inventors conducted extensive investigations and found that the above-described object could be accomplished by adding hydroxyl group-containing polyolefin and a crosslinking agent having a functional group capable of reacting with the hydroxyl group to a polyolefin-based adhesive. The present invention based on this finding is as follows.
[1] An adhesive comprising a polyolefin (a), a hydroxyl group-containing polyolefin (b) and a crosslinking agent (c) having a functional group capable of reacting with the hydroxyl group.
[2] The adhesive according to [1] above, wherein the crosslinking agent (c) is an isocyanate.
[3] The adhesive according to [1] or [2] above, wherein the content of the crosslinking agent (c) is 0.01 to 150 parts by weight relative to 100 parts by weight of the polyolefin (a).
[4] The adhesive according to any one of [1] to [3] above, wherein the value of A represented by the following formula (I) is 0.25 to 14250.

$$A = \text{hydroxyl value (mg KOH/g) of hydroxyl group-containing}$$

[5] The adhesive according to any one of [1] to [4] above, wherein the polyolefin (a) is a polymer having a constitutional unit derived from at least one kind selected from the group consisting of propylene, butene, hexene and octene.
[6] An adhesive tape comprising a substrate and an adhesive layer made of the adhesive according to any one of [1] to [5] above on at least one surface of the substrate.
[7] The adhesive tape according to any one of [1] to [6] above, wherein the adhesive layer has a thickness of 1 to 100 μm.

Effect of the Invention

Using the adhesive of the present invention, an adhesive layer superior in the anchor property to a substrate can be formed.

Brief Description of the Drawings

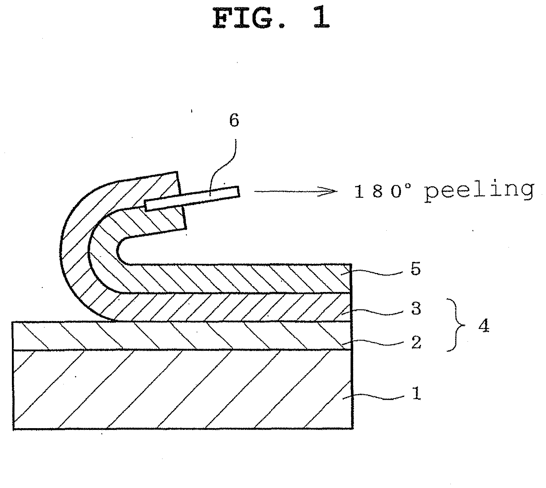

FIG. 1 is a schematic drawing showing how to peel the adhesive layer from the substrate in the adhesive tape in evaluating the anchor properties of the adhesive tapes prepared in Examples and Comparative Examples.

[Modes for Embodying the Invention]

1. Adhesive

The adhesive of the present invention contains (a) polyolefin, (b) hydroxyl group-containing polyolefin and (c) a crosslinking agent. These components are explained in this order in the following.

[Polyolefin (a)]

The adhesive of the present invention contains one or more kinds of polyolefin (a). In the present invention, "a polyolefin" means a polymer having an olefin-derived constitutional unit, and "olefins" include aromatic vinyl compounds such as styrene. Furthermore, "a polymer" as mentioned in the present invention refers to both a homopolymer and a copolymer. The polyolefin (a) may be any polyolefin that can be applied to the substrate in solution in an organic solvent along with other ingredients.

The polyolefin (a) is exemplified by $\alpha$-olefin homopolymers formed from one monomer selected from the group consisting of ethylene, propylene and $C_{4-20}$ $\alpha$-olefins. Examples of $C_{4-20}$ $\alpha$-olefins include 1-butene, 1-pentene, 3-methyl-1-butene, 1-hexene, 4-methyl-1-pentene, 3-methyl-1-pentene, 1-heptene, 1-octene, 1-decene, 1-dodecene and the like. The $\alpha$-olefin homopolymer is preferably a propylene homopolymer (polypropylene as defined in the narrow sense). Propylene homopolymers include, for example, amorphous polypropylenes and the like.

Other examples of the polyolefin (a) include $\alpha$-olefin copolymers formed from at least two monomers selected from the group consisting of ethylene, propylene and $C_{4-20}$ $\alpha$-olefins, with preference given to copolymers comprising ethylene as the main monomer (i.e., ethylene-based $\alpha$-olefin copolymers) and copolymers comprising propylene as the main monomer (i.e., propylene-based $\alpha$-olefin copolymers). The $\alpha$-olefin copolymer may be any of a random copolymer, block copolymer, and graft copolymer.

The amount of ethylene constitutional units in an ethylene-based $\alpha$-olefin copolymer is, for example, 50 to 95 mol%, preferably 70 to 95 mol%. The $\alpha$-olefin constitutional units contained in an ethylene-based $\alpha$-olefin copolymer are preferably those formed from at least one monomer selected from the group consisting of 1-butene, propylene, 1-hexene, and 1-octene. Ethylene-based $\alpha$-olefin copolymers of greater preference include ethylene-1-butene copolymers and ethylene-propylene copolymers. Such ethylene-1-butene copolymers may contain a constitutional unit derived from an $\alpha$-olefin other than ethylene and 1-butene at 10 mol% or less. Likewise, ethylene-propylene copolymers may contain a constitutional unit derived from an $\alpha$-olefin other than ethylene and propylene at 10 mol% or less. Such a copolymer can be produced by, for example, copolymerizing ethylene and an $\alpha$-olefin using a catalyst consisting of a transition metal catalytic component (e.g., vanadium compounds, zirconium compounds) and an organic aluminum compound catalytic component.

The amount of propylene constitutional units in a propylene-based $\alpha$-olefin copolymer is, for example, between more than 50 mol% and not more than 95 mol%, preferably 70 to 95 mol%. The $\alpha$-olefin constitutional units contained in a propylene-based $\alpha$-olefin copolymer are preferably those formed from at least one monomer selected from the group consisting of ethylene, 1-butene, 1-hexene, and 1-octene. Propylene-based $\alpha$-olefin copolymers of greater preference are propylene-ethylene random copolymers. The propylene-ethylene random copolymers may contain a constitutional unit derived from an $\alpha$-olefin other than propylene and ethylene at 10 mol% or less. A propylene-based $\alpha$-olefin copolymer can be produced by, for example, using a metallocene-based catalyst, as described in JP-A-2000-191862.

Commercially available $\alpha$-olefin copolymers can be used in the present invention. Commercially available ethylene-based $\alpha$-olefin copolymers include, for example, the TAFMER P series and the TAFMER A series (both manufactured by Mitsui Chemicals, Inc.), ENGAGE (manufactured by Dow Chemical Co.) and the like. Commercially available propylene-based $\alpha$-olefin copolymers include, for example, the TAFMER XM series (manufactured by Mitsui Chemicals, Inc.) and the like.

A polymethylpentene can also be used as the polyolefin (a). Polymethylpentenes include homopolymers of 4-methyl-1-pentene and copolymers of 4-methyl-1-pentene and another $\alpha$-olefin. The amount of 4-methyl-1-pentene constitutional units in a polymethylpentene copolymer is preferably 50 to 95 mol%, more preferably 70 to 95 mol%. The polymethylpentene may be a crystalline polymer. The α-olefin constitutional units in a polymethylpentene copolymer are preferably, for example, those derived from a $C_{2-20}$ α-olefin, such as ethylene, propylene, 1-butene, 1-hexene, 1-octene, 1-decene, 1-tetradecene, or 1-octadecene. Greater preference is given to 1-decene, 1-tetradecene and 1-octadecene, which exhibit good copolymerizability with 4-methyl-1-pentene. Commercially available polymethylpentenes include, for example, TPX-S (a 4-methyl-1-pentene-α-olefin copolymer manufactured by Mitsui Chemicals, Inc.).

The polyolefin (a) may also be any diene rubber that is soluble in organic solvents, exemplified by polyisoprenes and polybutadienes. These polyisoprenes preferably have a cis-1,4 linkage ratio of 90% or more and a Mooney viscosity (ML1+4 at 100°C) of 40 to 70. Commercially available polyisoprenes include, for example, IR-307 and IR-310 (manufactured by Kraton Performance Polymers Co.). These polybutadienes preferably have a cis-1,4 linkage ratio of 90% or more and a Mooney viscosity (ML1+4 at 100°C) of 25 to 50. Commercially available polybutadienes include, for example, Nipol BR1220 and Nipol BR1220L (manufactured by Nippon Zeon Co.), and BR01 (manufactured by JSR Co.).

The polyolefin (a) is also exemplified by hydrides of block copolymers of a block A composed mainly of a constitutional unit derived from an aromatic vinyl compound (hereinafter sometimes abbreviated as an aromatic vinyl compound unit) and a block B consisting of a constitutional unit derived from isoprene (hereinafter sometimes abbreviated as isoprene unit) and a constitutional unit derived from 1,3-butadiene (hereinafter sometimes abbreviated as 1,3-butadiene unit) (hereinafter sometimes abbreviated as hydrogenated TPE).

Aromatic vinyl compounds include, for example, styrene, α-methylstyrene, o-methylstyrene, m-methylstyrene, p-methylstyrene, t-butylstyrene, N,N-dimethyl-p-aminoethylstyrene, N,N-diethyl-p-aminoethylstyrene, divinylbenzene, vinylpyridine and the like. These may be used alone or in combination of two kinds or more. When using two kinds or more of aromatic vinyl compounds, they may have formed a block structure or a random structure in the block A.

The block A is composed mainly of aromatic vinyl compound units, and may contain constitutional units derived from a diene hydrocarbon such as isoprene or butadiene. The amount of these constitutional units derived from diene hydrocarbons is preferably 20% by weight or less in the block A. When this amount exceeds 20% by weight, a phenomenon wherein a portion or all of the adhesive layer remains on the surface of the adherend when the tape is peeled from the adherend (so-called adhesive deposit) tends to occur due to cohesive force reductions. These diene hydrocarbons may have formed a block structure or a random structure in the block A.

The block B consists of isoprene units and 1,3-butadiene units. The state of polymerization of isoprene and 1,3-butadiene may be any of random copolymerization, block copolymerization and tapered block copolymerization. It is preferable that the ethylenic double bond in each isoprene unit and 1,3-butadiene unit be hydrogenated, and that the hydrogenation ratio be 90% or more. This hydrogenation ratio is more preferably 95% or more, more preferably 97% or more. When the hydrogenation ratio is less than 90%, the weather resistance of the adhesive layer tends to decrease, which in turn leads to the tendency toward adhesive deposits on the adherend upon peeling.

Commercial products of hydrogenated TPEs can be used in the present invention. Commercially available hydrogenated TPEs include, for example, SEPTON 4030 (a hydride of styrene-1,3-butadiene-isoprene-styrene block copolymer; amount of styrene constitutional units in the copolymer: 13% by weight; amount of 1,3-butadiene constitutional units in the 1,3-butadiene-isoprene block: 45% by weight) and SEPTON 4033 (a hydride of styrene-1,3-butadiene-isoprene-styrene block copolymer; amount of styrene constitutional units in the copolymer: 30% by weight; amount of 1,3-butadiene constitutional units in the 1,3-butadiene-isoprene block: 50% by weight) manufactured by Kuraray Co. and the like.

As polyolefin (a), a styrene-based thermoplastic elastomer may be used. Examples of the styrene-based thermoplastic elastomer include styrene-based AB-type diblock copolymers (diblock copolymers) such as styrene-butadiene copolymer (SB), styrene-isoprene copolymer (SI), styrene-butylene copolymer and the like; styrene-based ABA-type block copolymers (triblock copolymers) such as styrene-butadiene-styrene copolymers (SBS), styrene-isoprene-styrene copolymers (SIS), styrene-butylene-styrene copolymers and the like; styrene-based ABAB-type block copolymers (tetrablock copolymers) such as styrene-butadiene-styrene-butadiene copolymer (SBSB), styrene-isoprene-styrene-isoprene copolymer (SISI) and the like; styrene-based ABABA-type block copolymers (pentablock copolymers) such as styrene-butadiene-styrene-butadiene-styrene copolymers (SBSBS), styrene-isoprene-styrene-isoprene-styrene copolymers (SISIS) and the like; multi-block copolymers having a constitutional unit of not less than the above; styrene-butadiene copolymer; styrene-isoprene random copolymer; and the like.

As the styrene-based thermoplastic elastomer, a product with a hydrogenated ethylenic double bond is preferably used from the aspects of weather resistance. Examples of such hydride include hydrides of AB-type diblock copolymer such as styrene-ethylene-butylene copolymer (SEB), styrene-ethylene-propylene copolymer (SEP) and the like; hydrides of ABA-type triblock copolymer or ABAB-type tetrablock copolymer such as styrene-ethylene-butylene copolymer-styrene (SEBS), styrene-ethylene-propylene copolymer-styrene (SEPS), styrene-ethylene-butylene copolymer-styrene-ethylene-butylene copolymer (SEBSEB) and the like; styrene-ethylene-butylene random copolymer (HSBR); and the like.

As the styrene-based thermoplastic elastomer, styrene-based random copolymers such as styrene-butadiene rubber (SBR) and the like, ABC-type styrene-olefin crystal-based block copolymers such as styrene-ethylene-butylene copolymer-olefin crystal (SEBC) and the like; and hydrides thereof can be mentioned.

When using a mixture of a hydrogenated TPE and a styrene-based thermoplastic elastomer as polyolefin (a), the content of the styrene-based thermoplastic elastomer is preferably 50% by weight or less, more preferably 30% by weight or less, in the sum of the hydrogenated TPE and the styrene-based thermoplastic elastomer. When this content is 50% by weight or less, adhesive deposits on the adherend can be suppressed satisfactorily.

The polyolefin (a) is also exemplified by isobutylene-based polymers. The isobutylene-based polymers may be isobutylene homopolymers or isobutylene copolymers (i.e., copolymers of isobutylene and another monomer). The amount of isobutylene-derived constitutional units in the isobutylene copolymer is preferably 50% by weight or more. Isobutylene copolymers include, for example, random copolymers of isobutylene and n-butylene, and copolymers of isobutylene and isoprene (regular butyl rubber, chlorinated butyl rubber, brominated butyl rubber, partially crosslinked butyl rubber and the like), as well as vulcanizates and modified products thereof and the like. The isobutylene-based polymer is preferably the homopolymer polyisobutylene.

The polyolefin (a) is preferably a polymer having a constitutional unit derived from at least one kind selected from the group consisting of propylene, butene (also known as butylene), hexene and octene [hereinafter referred to as polyolefin (a-1)]. The butene, hexene and octene may be linear or branched. Polyolefin (a-1) may be a homopolymer or a copolymer. Polyolefin (a-1) is exemplified by the above-described propylene homopolymers (polypropylenes in the narrow sense), propylene-based α-olefin copolymers, hydrogenated TPEs, isobutylene-based polymers and the like. In particular, propylene homopolymers (polypropylenes), hydrogenated TPEs and isobutylene-based polymers are preferable, with greater preference given to propylene homopolymers (polypropylenes) and polyisobutylenes.

The number average molecular weight (Mn) of the polyolefin (a) is preferably 3,000 to 1,000,000, more preferably 4,000 to 800,000. When the number average molecular weight is less than 3,000, the cohesive force may decrease, allowing adhesive deposits to remain on the adherend in some cases when the tape is laminated again. When the same exceeds 1,000,000, the adhesive force may decrease, making it difficult to obtain a desired adhesive force.

The content of the polyolefin (a) in the adhesive is preferably 10 to 99.95% by weight, more preferably 20 to 99.5% by weight. When the content is less than 10% by weight, the adhesive force may decrease, which in turn may making it difficult to obtain a desired adhesive force. When the same exceeds 99.95% by weight, the adhesion to the substrate may worsen. The "adhesive" which is the basis for calculating the content does not include the amount of organic solvent.

[Hydroxyl group-containing polyolefin (b)]

The adhesive of the present invention contains one or more kinds of hydroxyl group-containing polyolefin (b). The hydroxyl group-containing polyolefin (b) is used to be reacted with the crosslinking agent (c) when forming an adhesive layer. The hydroxyl group-containing polyolefin (b) is preferably one having good compatibility with polyolefins.

The number average molecular weight (Mn) of the hydroxyl group-containing polyolefin (b) is preferably 500 to 500,000, more preferably 1,000 to 200,000, still more preferably 1,200 to 150,000. When the number average molecular weight of the hydroxyl group-containing polyolefin (b) exceeds 500,000, the polyolefin (b) is almost insoluble in the layer with the crosslinking agent (c) as the major ingredient [i.e., a layer with a low content of polyolefin (a)] in the adhesive layer because of the low solubility with the crosslinking agent (c), whereas the hydroxyl group-containing polyolefin (b) mostly dissolves in the layer with the polyolefin (a) as the major ingredient and hence becomes unlikely to react with the crosslinking agent (c), which in turn may make it difficult to obtain satisfactory anchor property. Conversely, when the number average molecular weight of the hydroxyl group-containing polyolefin (b) is less than 500, the hydroxyl group-containing polyolefin (b) is likely to bleed out on the surface of the adhesive layer at high temperatures, which in turn may worsen the adhesive characteristics.

Hydroxyl group-containing polyolefin (b) is not particularly limited and, for example, polyethylene-based polyol, polypropylene-based polyol, polybutadiene polyol, hydrogenated polybutadiene polyol, polyisoprene polyol, and hydrogenated polyisoprene polyol and the like can be mentioned. Of these, hydrogenated polyisoprene polyol, polyisoprene polyol, polybutadiene polyol and hydrogenated polybutadiene polyol are preferable from the aspect of the compatibility with polyolefin (a).

It is preferable from the viewpoint of the strength of the adhesive layer that the hydroxyl value (mg KOH/g) of the hydroxyl group-containing polyolefin (b) be 5 or more. From the viewpoint of the adhesive force of the adhesive layer, the hydroxyl value is preferably 95 or less. The hydroxyl value (mg KOH/g) of the hydroxyl group-containing polyolefin (b) is more preferably 10 to 80.

As hydroxyl group-containing polyolefin (b), a commercially available product can be used. Examples of such commercially available product include Poly bd R-45HT (liquid polybutadiene having hydroxyl group on the terminal, number average molecular weight 2800, hydroxyl value 46.6 mg KOH/g, manufactured by Idemitsu Kosan Co., Ltd.), Poly ip (liquid polyisoprene having hydroxyl group on the terminal, number average molecular weight 2500, hydroxyl value 46.6 mg KOH/g, manufactured by Idemitsu Kosan Co., Ltd.), Epole (liquid hydrogenated polyisoprene having hydroxyl group on the terminal, number average molecular weight 2500, hydroxyl value 50.5 mg KOH/g, manufactured by Idemitsu Kosan Co., Ltd.), GI-1000 (liquid polybutadiene having hydroxyl group, number average molecular weight 1500, hydroxyl value 60 - 75 mg KOH/g, manufactured by Nippon Soda Co., Ltd.), GI-2000 (liquid hydrogenated polybutadiene having hydroxyl group, number average molecular weight 2100, hydroxyl value 40 - 55 mg KOH/g, manufactured by Nippon Soda Co., Ltd.), GI-3000 (liquid polybutadiene having hydroxyl group, number average molecular weight 3000, hydroxyl value 25 - 35 mg KOH/g, manufactured by Nippon Soda Co., Ltd.), UNISTOLE P-801 (polyolefin having hydroxyl group, number average molecular weight not less than 5000, hydroxyl value 40 mg KOH/g, manufactured by Mitsui Chemicals, Inc.), UNISTOLE P-901 (polyolefin having hydroxyl group, number average molecular weight not less than 5000, hydroxyl value 50 mg KOH/g, manufactured by Mitsui Chemicals, Inc.) and the like.

The content of the hydroxyl group-containing polyolefin (b) in the adhesive is set so that the value of A represented by the following formula (I) will be preferably 0.25 to 14250, more preferably 0.5 to 12000, still more preferably 1 to 2500.

```
A = hydroxyl value (mg KOH/g) of hydroxyl group-containing
polyolefin (b) × number of parts by weight of hydroxyl group-
containing polyolefin (b) relative to 100 parts by weight of
polyolefin (a)     (I)
```

When the value of A is smaller than 0.25, the strength of the adhesive layer tends to be insufficient. When the same is greater than 14250, the adhesive force tends to decrease.

[Crosslinking agent (c)]

The adhesive of the present invention contains one or more kinds of crosslinking agent (c). The crosslinking agent (c) is used to be reacted with the hydroxyl group-containing polyolefin (b) when forming an adhesive layer. For this reason, the crosslinking agent (c) must have a functional group capable of reacting with the hydroxyl group. Functional groups capable of reacting with the hydroxyl group include, for example, the isocyanate group (also called isocyanato group) and the carboxy group. From the viewpoint of reactivity, the functional group capable of reacting with the hydroxyl group is preferably the isocyanate group. Hence, the crosslinking agent (c) is preferably an isocyanate.

Isocyanate may be any of aromatic isocyanate and aliphatic isocyanate. Isocyanate is preferably aromatic isocyanate.

From the aspects of the strength and the like of the adhesive layer, isocyanate is preferably polyisocyanate having not less than 3 isocyanate groups in one molecule, more preferably at least one selected from a group consisting of aromatic polyisocyanate and aliphatic polyisocyanate, still more preferably at least one selected from a group consisting of an adduct of an aromatic diisocyanate with a polyvalent alcohol and an adduct of an aliphatic diisocyanate with a polyvalent alcohol.

Examples of aromatic diisocyanate include tolylene diisocyanate, diphenylmethane diisocyanate, 1,5-naphthylene diisocyanate, tolidine diisocyanate, xylylene diisocyanate, tetramethylxylylene diisocyanate and the like. Of these, tolylene diisocyanate is preferable from the aspects of reactivity and anchor property of the obtained adhesive layer.

Examples of aliphatic diisocyanate include 1,6-hexamethylene diisocyanate, 1,4-tetramethylene diisocyanate, 2-methyl-1,5-pentane diisocyanate, 3-methyl-1,5-pentane diisocyanate, lysine diisocyanate, isophorone diisocyanate, cyclohexyldiisocyanate, hydrogenated tolylene diisocyanate, hydrogenated xylene diisocyanate, hydrogenated diphenylmethane diisocyanate, hydrogenated tetramethylxylene diisocyanate and the like. Of these, 1,6-hexamethylene diisocyanate is preferable from the aspects of reactivity and anchor property of the obtained adhesive layer.

Examples of polyvalent alcohol include aliphatic polyvalent alcohol such as ethylene glycol, glycerol, trimethylolpropane, pentaerythritol, ditrimethylolpropane, dipentaerythritol and the like, and the like. Of these, trimethylolpropane is preferable.

Examples of polyisocyanate include a compound having an isocyanate group on the terminal obtained by reacting the aforementioned polyvalent alcohol and an excess amount of the aforementioned diisocyanate.

The content of the crosslinking agent (c) is preferably 0.01 to 150 parts by weight, more preferably 0.01 to 20 parts by weight, still more preferably 0.05 to 10 parts by weight, relative to 100 parts by weight of the polyolefin (a). When the content is less than 0.01 part by weight, the anchor property (i.e., adhesiveness to a substrate) of the adhesive layer may decrease. When the same exceeds 150 parts by weight, adverse effects may arise, including shortening of the pot life of the adhesive solution and reductions of the adhesiveness (i.e., adhesiveness to the adherend) of the adhesive layer.

[Optional ingredients]

The adhesive of the present invention may contain one or more kinds of optional ingredients. Optional ingredients include, for example, urethane catalysts for promoting the reaction of the hydroxyl group-containing polyolefin (b) and isocyanate [i.e., crosslinking agent (c)]; and the like.

The adhesive of the present invention may contain one or more kinds of urethane catalysts. Urethane catalysts include, for example, tin compounds such as dibutyltin dilaurate and dioctyltin dilaurate; carboxylates of metals such as zinc, cobalt, copper, and bismuth; amine compounds such as 1,4-diazabicyclo[2.2.2]octane; chelate compounds of metals such as iron, titanium, and zirconium; and the like. Salts of bismuth with organic acid (salts of bismuth with alicyclic organic acids such as salts of bismuth with resin acids containing abietic acid, neoabietic acid, d-pimaric acid, iso-d-pimaric acid, or podocarpic acid, or a combination of two kinds or more thereof, as the major ingredient; salts of bismuth with aromatic organic acids such as benzoic acid, cinnamic acid, and p-oxycinnamic acid; and the like) can also be used. In particular, from the viewpoint of compatibility with the adhesive and urethanization reactivity, iron chelate compounds, dibutyltin dilaurate, dioctyltin dilaurate, and salts of bismuth with resin acids are preferable, with greater preference given to iron chelate compounds for their reactivity.

The content of the urethane catalyst is preferably 0.001 to 2.0 parts by weight, more preferably 0.005 to 1.5 parts by weight, still more preferably 0.008 to 1.0 parts by weight, relative to 100 parts by weight of the polyolefin (a). When the content is less than 0.001 part by weight, the catalyst effect may be insufficient. When the content exceeds 2.0 parts by weight, drawbacks may arise, such as shortening of the pot life of the adhesive solution. As mentioned herein, the content of catalyst means the amount of the catalyst (i.e., active ingredient) only; when using, for example, a commercially available catalyst solution, the content means the amount of the catalyst only, excluding the amount of the solvent.

The adhesive of the present invention may contain, as necessary, a resin other than the aforementioned polyolefin (a) and hydroxyl group-containing polyolefin (b), antioxidant, UV absorber, light stabilizer such as hindered amine light stabilizer and the like, antistatic agent, a filler such as carbon black, calcium oxide, magnesium oxide, silica, zinc oxide, titanium oxide and the like, pigment and the like.

2. Adhesive tape

The present invention also provides an adhesive tape comprising a substrate and an adhesive layer. The adhesive tape of the present invention comprises an adhesive layer made of the adhesive of the present invention on at least one surface of the substrate. The substrate and the adhesive layer are sequentially explained below.

[Substrate]

In the present invention, the substrate is not particularly limited. However, the substrate is preferably a plastic film with a smooth surface. Examples of the plastic film include polyester films such as poly(ethylene terephthalate) film, poly(butylene terephthalate) film and the like; polyolefin films such as polyethylene film, polypropylene film and the like. In addition, paper such as craft paper, glassine paper, high-quality paper and the like may be used as a substrate. As a paper substrate, a substrate laminated with a plastic such as polyethylene and the like, or a substrate applied with a filling treatment is preferable for preventing excess impregnation of the substrate with an adhesive. The substrate may be subjected to a treatment in advance such as a corona treatment, a plasma treatment, a flame treatment and the like as necessary.

The thickness of the substrate is not particularly limited, and can be appropriately determined according to the object of use. When a plastic film is used as a substrate, the thickness thereof is generally about 12 - 250 μm, preferably 16 - 200 μm, more preferably 25 - 125 μm.

Where necessary, moreover, the substrate may contain an antioxidant, a UV absorber, a light stabilizer such as hindered amine light stabilizer and the like, an antistatic agent, a filler such as carbon black, calcium oxide, magnesium oxide, silica, zinc oxide, titanium oxide and the like, a pigment and the like.

[Adhesive layer]

The adhesive layer can be formed by, for example, dissolving the above-described adhesive ingredients in a solvent to yield an adhesive solution, and applying and drying the resulting adhesive solution on a substrate. The solid content of the adhesive solution is not subject to limitations in the present invention, and is normally in the range of 5 to 50% by weight.

The choice of solvent is not subject to limitations, as far as the adhesive ingredients are uniformly soluble therein. Because the adhesive of the present invention contains a polyolefin (a), however, it is preferable that the solvent be one kind of hydrocarbon-based solvent alone, or a mixed solvent of two kinds or more of hydrocarbon-based solvents, or a mixed solvent of a hydrocarbon-based solvent and other solvent. When using a mixed solvent, the content of the hydrocarbon-based solvent is preferably 50% by weight or more, more preferably 70% by weight or more, still more preferably 90% by weight or more, in the mixed solvent. Hydrocarbon-based solvents include, for example, aliphatic hydrocarbons such as n-hexane and n-heptane; alicyclic hydrocarbons such as cyclohexane; and aromatic hydrocarbons such as toluene and xylene. Other solvents include, for example, ketones such as methyl ethyl ketone, cyclohexanone, and acetylacetone; esters such as ethyl acetate; alcohols such as methanol, ethanol, and isopropyl alcohol; and the like.

A method for applying the adhesive solution is not particularly limited, and any publicly known method can be used; for example, methods using kiss-roll coaters, bead coaters, rod coaters, Mayer bar coaters, die coaters, gravure coaters and the like can be used. Also for drying the adhesive solution, any publicly known method can be used. an ordinary method of drying is hot blow drying. Hot blow drying temperature can vary depending on the heat resistance of the substrate, and is normally about 60 to 150°C.

The thickness of the adhesive layer in the adhesive tape (i.e., dried thickness) is preferably 1 to 100 μm, more preferably 2 to 80 μm, still more preferably 3 to 60 μm. When the thickness is less than 1 μm, the adhesiveness (i.e., adhesiveness of the adhesive layer to the adherend) may be insufficient. When the thickness exceeds 100 μm, cohesion failures may occur in the adhesive layer when removing the tape from the adherend, which in turn may cause adhesive deposits on the adherend.

The adhesive tape of the present invention may have a release agent layer to protect the adhesive layer. For example, the adhesive tape of the present invention may have a release agent layer on the substrate on the side opposite to the adhesive layer (i.e., the "adhesive layer / substrate /release agent layer" configuration). In this configuration, the release agent layer is sometimes called a back coating layer, and the adhesive tape is sometimes called an adhesive tape with a back coating layer.

To protect the adhesive layer of the adhesive tape of the present invention, a release material having a release agent layer formed on the substrate thereof may be used. Specifically, by bringing into mutual contact the adhesive layer of the adhesive tape of the present invention and the release agent layer of the release material, the adhesive layer may be protected (i.e., the "substrate of adhesive tape / adhesive layer /release agent layer / substrate of release material" configuration). an adhesive tape in this configuration is also called an adhesive tape with a release material.

The adhesive tape of the present invention may assume any of a form wherein a long tape is wound like a roll, and a form wherein cut pieces of appropriate size from a long tape are stacked.

3. Physical properties, characteristics and the like

The values of physical properties, characteristics and the like given herein are measured values obtained by the methods shown below.

(1) Number average molecular weight
A value determined in accordance with ASTM D2503.
(2) Hydroxyl value
A value determined in accordance with JIS K1557:1970. Examples

The present invention is hereinafter described more specifically by means of the following Examples and Comparative Examples, which, however, do not limit the scope of the invention. In the description below, "parts" and "%" indicate "parts by weight" and "% by weights", respectively, unless otherwise specified.

[Preparation of adhesive solution]

Various ingredients were blended in the numbers of parts shown in Tables 1 and 2, and this mixture was dissolved in toluene to yield an adhesive solution having a solid content of 15%. The numbers of parts of the various ingredients shown in Tables 1 and 2 do not include the solvent. Hence, the numbers of parts shown in Tables 1 and 2 indicate the numbers of parts of the ingredients themselves (solid contents) contained in the solution, provided that the ingredients are obtained in solution. Also shown in Tables 1 and 2 are values of A in the formula (I) above.

Abbreviations of each component in Tables 1, and 2 mean the following.

(1) polyolefin (a)

B80: "Oppanol B80" (polyisobutylene, number average molecular weight 180,000) manufactured by BASF Japan Ltd.
B12: "Oppanol B12" (polyisobutylene, number average molecular weight 13,000) manufactured by BASF Japan Ltd.
app: "Tafcelene H5002" (amorphous copolymer of propylene and 1-butene) manufactured by Sumitomo Chemical Company, Limited

(2) hydroxyl group-containing polyolefin (b)

Epole: "Epole" (liquid hydrogenated polyisoprene having hydroxyl group on the terminal, number average molecular weight 2500, hydroxyl value 50.5 mg KOH/g) manufactured by Idemitsu Kosan Co., Ltd.
Poly ip: "Poly ip" (liquid polyisoprene having hydroxyl group on the terminal, number average molecular weight 2500, hydroxyl value 46.6 mg KOH/g) manufactured by Idemitsu Kosan Co., Ltd.
GI3000: "GI-3000" (hydrogenated polybutadiene having hydroxyl group on the terminal, number average molecular weight about 3000, hydroxyl value 25 - 35 mg KOH/g) manufactured by Nippon Soda Co., Ltd.
UNISTOLE: "UNISTOLE P-901" (22% toluene solution of hydroxyl group-containing polyolefin, toluene-free product is solid, number average molecular weight of hydroxyl group-containing polyolefin >5000, hydroxyl value 50 mg KOH/g) manufactured by Mitsui Chemicals, Inc.

(3) crosslinking agent (c)

C/L: "CORONATE L" (75% ethyl acetate solution of adduct of tolylene diisocyanate with trimethylolpropane, isocyanate group number in one molecule: 3) manufactured by Nippon Polyurethane Industry Co., Ltd.
C/HL: "CORONATE HL" (75% ethyl acetate solution of adduct of hexamethylene diisocyanate with trimethylolpropane, isocyanate group number in one molecule: 3) manufactured by Nippon Polyurethane Industry Co., Ltd.

(4) urethane catalyst

DBTDL: "dibutyltin(IV) dilaurate" (dibutyltin dilaurate) manufactured by Wako Pure Chemical Industries, Ltd.
Fe $(C_5H_7O_2)_3$: "Nacem Ferric Iron" (iron-chelating compound) manufactured by NIHON KAGAKU SANGYO CO., LTD.

[Preparation of adhesive tape (formation of adhesive layer)]

The resulting adhesive solution was applied over each substrate shown in Tables 1 and 2 using a Baker applicator. This was followed by heating in a hot blow drier at 80°C for 2 min to yield an adhesive tape. The thicknesses of the adhesive layers of the obtained adhesive tapes are shown in Tables 1. and 2.
Abbreviations of substrates in Tables 1, and 2 mean the following.

(1) PET

"LUMIRROR S10" (poly(ethylene terephthalate) film, thickness 25 μm) manufactured by Toray Industries, Inc.

(2) OPP corona

"Torayfan BO2548" (biaxially-oriented polypropylene film after corona discharge treatment of both surfaces, thickness 30 μm) manufactured by Toray Industries, Inc.

(3) PP/PE corona

polypropylene/linear low density polyethylene film (thickness 35 μm) after corona discharge treatment of both surfaces, which was prepared as below

[Preparation of PP/PE corona]

A molding material consisting of 80 parts of polypropylene (NOVATEC-PP FY4, manufactured by Japan Polypropylene Corporation) and 20 parts of linear low-density polyethylene (KERNEL KF380, manufactured by Japan Polyethylene Corporation) was kneaded in a molten state using a film forming machine and then extruded from a T-die attached to the forming machine to yield a polypropylene/linear low-density polyethylene film. The both surfaces of this film were subjected to corona discharge treatment, and a release agent layer (about 0.05 μm thick) was formed on the surface (back surface) opposite to the surface of the film for forming an adhesive layer by using a long-chain alkyl-based release agent.

[Evaluation of adhesive tapes]

The anchor property (i.e., adhesiveness of adhesive layer to substrate) and adhesiveness of the resulting adhesive tapes (i.e., adhesiveness of adhesive layer to adherend) were evaluated as described below.

(1) Evaluation of anchor property

An SUS plate was attached as a backing to the substrate of a 20 mm wide cut piece of adhesive tape using a double-coated adhesive tape. The sample adhesive tape and No. 315 Tape (a rubber-based adhesive 19 mm wide manufactured by NITTO DENKO CORPORATION) were laminated together in a way such that the glue surface of No. 315 Tape came into contact with the adhesive layer of this adhesive tape. In this operation, a filler paper cord was sandwiched between these tapes. While the filler paper cord was being carried by a fastener, the No. 315 Tape was pulled in a 180° direction at a speed of 100 m/min using a tensile tester to detach the adhesive layer from the adhesive tape. The force required for the detaching (i.e., the anchoring force required for detaching the adhesive layer from the substrate) was measured. The results are shown in Table 3. How to separate the adhesive layer from the substrate of the adhesive tape is schematized in FIG. 1.
Regarding the detachment form of the adhesive layer from the substrate, a sensory evaluation was performed to determine the touch of the adhesive tape substrate surface after removing the adhesive layer. When a touch of the adhesive was felt (i.e., a portion of the adhesive layer remained on the substrate upon removal), the sample was given the rating "cohesion failure". When only a touch of the substrate was felt (i.e., the entire adhesive layer was removed), the sample was given the rating "anchor failure". The results are shown in Table 3.
In addition, the adhesive tapes of Examples include those with a substrate broken during detachment of the adhesive layer from the substrate, and they are indicated as "substrate broken" in Table 3.

(2) Evaluation of adhesiveness

A 10 mm × 100 mm cut piece of the adhesive tape was placed on the adherend (an SUS304 plate) and pressure-bonded by one reciprocal motion of a 2-kg roller. The adhesive tape bonded to the adherend was allowed to stand in 23°C air for 20 to 40 minutes. Subsequently, the adhesive tape was pulled in 23°C air in a 180' direction at a speed of 300 mm/min, and the force required to remove the adhesive tape from the adherend (i.e., adhesive force) was determined using a tensile tester. The results are shown in Table 3.
Table 1

| Example | composition of adhesive (part) | A value | thickness of adhesive layer (μm) | substrate |
|---------|-------------------------------|---------|----------------------------------|-----------|
| 1 | B80:Epole:C/L:DBTDL =100:2:3:0.2 | 101 | 10 | PET |
| 2 | B80:Epole:C/L:DBTDL =100:2:3:0.2 | 101 | 30 | PET |
| 3 | B80:B12:Epole:C/L:DBTDL =100:30:2:3:0.2 | 77.7 | 7 | PET |
| 4 | B80:B12:Epole:C/L:DBTDL =100:30:3:10:0.2 | 117 | 7 | OPP corona |
| 5 | B80:B12:Epole:C/L:DBTDL =100:30:2:3:0.2 | 77.7 | 7 | PP/PE corona |
| 6 | B80:B12:Epole:C/L =100:30:2:3 | 77.7 | 7 | OPP corona |
| 7 | B80:B12:Epole:C/L:DBTDL =100:30:3:10:0.2 | 117 | 7 | PET |

(continued)

| Example | composition of adhesive (part) | A value | thickness of adhesive layer (μm) | substrate |
|---|---|---|---|---|
| 8 | B80:B12:Epole:C/HL:DBTDL =100: 30:2:3:0.2 | 77.7 | 7 | PET |
| 9 | B80:Epole:C/L:DBTDL =100:20:30: 0.2 | 1010 | 30 | PET |
| 10 | aPP:Epole:C/L:DBTDL =100:2:3:0.2 | 101 | 7 | PET |
| 11 | B80:poly ip:C/L:DBTDL =100:2:3:0.2 | 93.2 | 30 | PET |
| 12 | B80:GI3000:C/L:DBTDL =100:2:3:0.2 | 50 - 70 | 30 | PET |
| 13 | B80:UNISTOLE:C/L:DBTDL =100:2: 3:0.2 | 100 | 30 | PET |
| 14 | B80:Epole:C/L:DBTDL =100:120: 120:0.2 | 6060 | 30 | PET |
| 15 | B80:Epole:C/L:Fe $(C_5H_7O_2)_3$ =100:2: 3:0.2 | 101 | 10 | PET |
| 16 | B80:Epole:C/L:Fe$(C_5H_7O_2)_3$ =100:2: 3:0.01 | 101 | 10 | PET |

Table 2

| Comparative Example | composition of adhesive (part) | A value | thickness of adhesive layer (μm) | substrate |
|---|---|---|---|---|
| 1 | B80=100 | - | 10 | PET |
| 2 | 880=100 | - | 30 | PET |
| 3 | B80:B12=100:30 | - | 7 | PET |
| 4 | aPP=100 | - | 7 | PET |
| 5 | B80:B12:C/L:DBTDL =100:30: 2:3:0.2 | - | 7 | PET |
| 6 | 880:B12:Epole:DBTDL= 100: 30:2:0.2 | 77.7 | 7 | PET |

Table 3

| | anchor property | | adhesive force (N/10 mm) |
|---|---|---|---|
| | detachment form | anchoring force (N/19 mm) | |
| Example 1 | cohesion failure | 42< | 0.3 |
| Example 2 | cohesion failure | 42< | 1.4 |
| Example 3 | cohesion failure | 38< | 1.4 |
| Example 4 | substrate broken | 21< | 0.7 |
| Example 5 | substrate broken | 23< | 1.2 |
| Example 6 | substrate broken | 20< | 0.2 |
| Example 7 | cohesion failure | 40< | 0.3 |
| Example 8 | cohesion failure | 39< | 0.7 |

(continued)

| | anchor property | | adhesive force (N/10 mm) |
| --- | --- | --- | --- |
| | detachment form | anchoring force (N/19 mm) | |
| Example 9 | cohesion failure | 39< | 0.1 |
| Example 10 | cohesion failure | 28< | 0.1 |
| Example 11 | cohesion failure | 43< | 3.0 |
| Example 12 | cohesion failure | 32< | 1.7 |
| Example 13 | cohesion failure | 46< | 3.7 |
| Example 14 | cohesion failure | 10< | 0.013 |
| Example 15 | cohesion failure | 38< | 0.2 |
| Example 16 | cohesion failure | 20< | 0.3 |
| Comparative Example 1 | anchor failure | 2.6 | 1.4 |
| Comparative Example 2 | anchor failure | 3.7 | 2.2 |
| Comparative Example 3 | anchor failure | 5.0 | 1.6 |
| Comparative Example 4 | anchor failure | 5.2 | 0.2 |
| Comparative Example 5 | anchor failure | 15 | 0.6 |
| Comparative Example 6 | anchor failure | 2.0 | 0.3 |

As shown in Table 3, the adhesive tapes of Examples 1 - 16 showed the detachment form of "cohesion failure" or "substrate broken" between the substrate and the adhesive layer. These results reveal that the adhesive tapes of Examples 1 - 16 are superior in the anchor property, since the substrate and the adhesive layer are adhered tightly to each other. In contrast, the adhesive tapes of Comparative Examples 1 - 6 shown in Table 2 are inferior in the anchor property, since anchor failure occurred on detachment of the adhesive layer from the substrate, leaving no adhesive layer on the substrate. A comparison of Examples 1 - 16 and Comparative Examples 1 - 6 reveals that an adhesive layer formed from the adhesive of the present invention exhibits superior anchor property.

Industrial Applicability

The adhesive of the present invention can form an adhesive layer superior in the anchor property to the substrate. An adhesive tape provided with such adhesive layer can be preferably used for various applications.

[Explanation of Symbols]

1    SUS plate
2    substrate
3    adhesive layer
4    adhesive tape
5    "No. 315 tape" manufactured by NITTO DENKO CORPORATION
6    filler paper cord

**Claims**

1. An adhesive comprising a polyolefin (a), a hydroxyl group-containing polyolefin (b) and a crosslinking agent (c) having a functional group capable of reacting with the hydroxyl group.

2. The adhesive according to claim 1, wherein the crosslinking agent (c) is an isocyanate.

3. The adhesive according to claim 1 or 2, wherein the content of the crosslinking agent (c) is 0.01 to 150 parts by weight relative to 100 parts by weight of the polyolefin (a).

4. The adhesive according to any one of claims 1 to 3, wherein the value of A represented by the following formula (I) is 0.25 to 14250.

```
A = hydroxyl value (mg KOH/g) of hydroxyl group-containing
polyolefin (b) × number of parts by weight of hydroxyl group-
containing polyolefin (b) relative to 100 parts by weight of
polyolefin (a)      (I)
```

5. The adhesive according to any one of claims 1 to 4, wherein the polyolefin (a) is a polymer having a constitutional unit derived from at least one kind selected from the group consisting of propylene, butene, hexene and octene.

6. An adhesive tape comprising a substrate and an adhesive layer made of the adhesive according to any one of claims 1 to 5 on at least one surface of the substrate.

7. The adhesive tape according to claim 6, wherein the adhesive layer has a thickness of 1 to 100 $\mu$m.

# FIG. 1

Europäisches
Patentamt

European
Patent Office

Office européen
des brevets

## EUROPEAN SEARCH REPORT

Application Number

EP 12 15 3742

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 312 656 A2 (NITTO DENKO CORP [JP]) 21 May 2003 (2003-05-21) * comparative example 1,; paragraph [0020] - paragraph [0025]; example 1 * | 1-3,6,7 | INV. C09J123/14 C09J123/22 C09J7/02 |

TECHNICAL FIELDS
SEARCHED      (IPC)

C09J

The present search report has been drawn up for all claims

| Place of search | Date of completion of the search | Examiner |
|---|---|---|
| Munich | 3 May 2012 | Knutzen-Mies, Karen |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

......................................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 12 15 3742

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2012

| Patent document cited in search report | | Publication date | Patent family member(s) | | Publication date |
|---|---|---|---|---|---|
| EP 1312656 | A2 | 21-05-2003 | EP | 1312656 A2 | 21-05-2003 |
| | | | JP | 2003147325 A | 21-05-2003 |
| | | | US | 2003091818 A1 | 15-05-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4370179 A

- JP 2000191862 A